# FASCICULE DE BREVET EUROPEEN

(11) **EP 4 484 293 B1**
(45) Date de publication et mention de la délivrance du brevet: **05.08.2026**
(21) Numéro de dépôt: 24183252.6
(22) Date de dépôt: 20.06.2024
(51) Int. Cl.: B64D 15/12, B64D 33/02, B64D 15/16

(54) **PANNEAU D'ATTÉNUATION ACOUSTIQUE COMPRENANT UN SYSTÈME DE TRAITEMENT DU GIVRE PAR INDUCTION, ENTRÉE D'AIR D'UNE NACELLE D'AÉRONEF ET AÉRONEF COMPORTANT UN TEL PANNEAU**
SCHALLDÄMMPLATTE MIT EINEM SYSTEM ZUR INDUKTIONSEISBEHANDLUNG, LUFTEINLASS EINER FLUGZEUGGONDEL UND FLUGZEUG MIT SOLCH EINER PLATTE
ACOUSTIC ATTENUATION PANEL COMPRISING AN INDUCTION ICE TREATMENT SYSTEM, AIR INTAKE FOR AN AIRCRAFT NACELLE AND AIRCRAFT COMPRISING SUCH A PANEL

(30) Priorité: 28.06.2023 FR 2306751
(43) Date de publication de la demande: 01.01.2025
(73) Titulaire: AIRBUS OPERATIONS (S.A.S.), 31060 Toulouse (FR)
(72) Inventeur: CREBASSOL, Florent, 31060 TOULOUSE (FR); SMITH, Grégoire, 31060 TOULOUSE (FR); HUET, Florent, 31060 TOULOUSE (FR); PONS, François, 31060 TOULOUSE (FR)
(74) Mandataire: Fantin, Laurent

(56) Documents cités:
- EP-A1- 3 135 587
- DE-B4- 102007 026 246
- US-A1- 2011 049 300
- US-A1- 2017 361 938

## Description

La présente demande se rapporte à un panneau d'atténuation acoustique comprenant un système de traitement du givre par induction, à une entrée d'air d'une nacelle d'aéronef comportant au moins un tel panneau d'atténuation acoustique ainsi qu'à un aéronef comportant au moins un tel panneau d'atténuation acoustique.

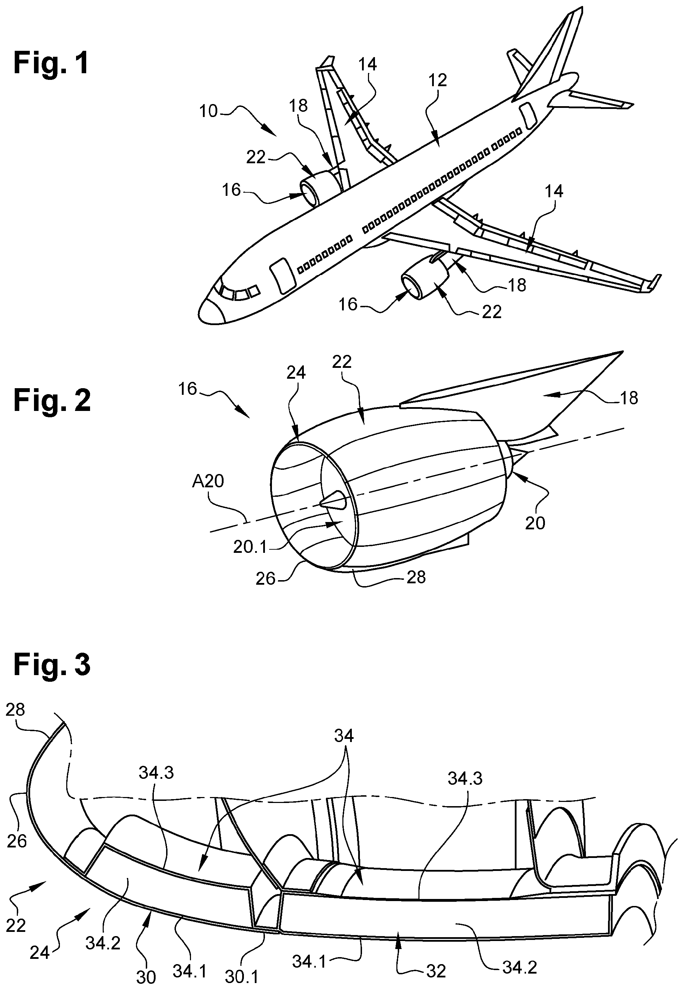

Selon un mode de réalisation visible sur la figure 1, un aéronef 10 comprend un fuselage 12, des ailes 14 positionnées de part et d'autre du fuselage 12 ainsi que des ensembles de propulsion 16 positionnés sous les ailes 14 et reliés à ces dernières par des mâts 18. Comme illustré sur la figure 2, chaque ensemble de propulsion 16 comprend une motorisation 20 ainsi qu'une nacelle 22 positionnée autour de la motorisation 20.

La motorisation 20 présente un axe de rotation A20. Pour la présente demande, une direction longitudinale est parallèle à l'axe de rotation A20 de la motorisation 20. Un plan longitudinal contient l'axe de rotation A20 de la motorisation 20. Un plan transversal est perpendiculaire à l'axe de rotation A20 de la motorisation 20.

La nacelle 22 comprend, à l'avant, une entrée d'air 24 configurée pour canaliser un flux d'air en direction de la motorisation 20 et notamment d'une soufflante 20.1 de la motorisation 20. Comme illustré sur les figures 2 et 3, l'entrée d'air 24 comprend une lèvre 26 qui forme un bord d'attaque circulaire, une paroi extérieure 28 prolongeant la lèvre 26 vers l'extérieur de la nacelle 22 ainsi qu'un conduit intérieur 30 prolongeant la lèvre 26 vers l'intérieur de la nacelle 22. Ce conduit intérieur 30 comprend un bord arrière 30.1 relié à un carter de soufflante 32 positionné autour de la soufflante de la motorisation. Selon une configuration, le conduit intérieur 30 et le carter de soufflante 32 comprennent chacun au moins un panneau d'atténuation acoustique 34 configuré pour atténuer au moins une onde acoustique. De manière connue, un panneau d'atténuation acoustique 34 comprend une couche acoustiquement résistive 34.1 en contact avec un flux d'air, au moins une structure alvéolaire 34.2 ainsi qu'une couche réflectrice 34.3. Ce panneau d'atténuation acoustique 34 fonctionne selon le principe d'un résonateur d'Helmholtz, la couche acoustiquement résistive 34.1 étant poreuse pour au moins certaines ondes acoustiques à atténuer qui pénètrent dans les alvéoles de la structure alvéolaire 34.2 pour y être atténuées, la couche réflectrice 34.3 étant imperméable aux ondes acoustiques.

En fonction des conditions climatiques et des phases de vol, l'entrée d'air 24 est une zone propice à la formation et/ou à l'accumulation de givre et/ou de glace. Pour limiter l'apparition et/ou l'accumulation du givre et/ou de glace au niveau de la lèvre 26 et éventuellement du conduit intérieur 30, ces zones comprennent un système de traitement du givre. Selon un mode de réalisation, le système de traitement du givre est de type électrique et comprend au moins un tapis résistif appliqué contre la face intérieure de la paroi à traiter et recouvrant toute la zone à traiter ainsi qu'un générateur de courant relié au tapis résistif. En circulant dans le tapis résistif, le courant électrique génère un échauffement par effet Joule.

Selon un premier mode de réalisation, pour ne pas perturber le fonctionnement du panneau acoustique, le tapis résistif est positionné contre la couche réflectrice 34.3. Pour permettre la propagation de la chaleur de la couche réflectrice 34.3 jusqu'à la face extérieure (en contact avec le flux d'air) de la couche acoustiquement résistive 34.1, tous les éléments constituant le panneau d'atténuation acoustique 34 doivent être en un matériau thermiquement conducteur comme en métal par exemple, ce qui tend à significativement augmenter la masse du panneau d'atténuation acoustique 34 qui est généralement en matériau composite s'il n'intègre pas la fonction de traitement du givre.

Selon un deuxième mode de réalisation, le tapis résistif est positionné contre la face intérieure de la couche acoustiquement résistive 34.1. Contrairement au premier mode de réalisation, la structure alvéolaire 34.2 et la couche réflectrice 34.3 peuvent être réalisées en un matériau non conducteur sur le plan thermique. Selon ce deuxième mode de réalisation, les zones de la couche acoustiquement résistive 34.1 situées au droit des tapis résistifs ne sont pas perforées ou, si elles le sont, le fonctionnement du panneau acoustique est fortement perturbé au droit des tapis résistifs. Par conséquent, la présence de ces tapis résistifs au niveau de la couche acoustiquement résistive 34.1 altère le traitement acoustique.

Les documents EP3135587 et US2011/049300 décrivent chacun un panneau d'atténuation acoustique qui comporte un premier système de traitement du givre par induction comprenant des bandes en matériau conducteur électrique espacées entre elles, intégrées dans la structure acoustiquement résistive du panneau d'atténuation acoustique et configurées pour générer un échauffement grâce à un phénomène d'induction.

La présente invention vise à remédier à tout ou partie des inconvénients de l'art antérieur.

A cet effet, l'invention a pour objet un panneau d'atténuation acoustique présentant une première face, configurée pour être en contact avec un flux d'air dans lequel se propage au moins une onde acoustique en fonctionnement, ainsi qu'une deuxième face opposée à la première face, ledit panneau d'atténuation acoustique comprenant au moins un système de traitement du givre et, de la première face vers la deuxième face, une structure acoustiquement résistive dont une surface forme la première face, au moins une structure alvéolaire ainsi qu'une couche réflectrice dont une surface forme la deuxième face. En complément, le système de traitement du givre comporte au moins un premier système de traitement du givre par induction qui comprend au moins un générateur de champs électromagnétiques positionné au niveau de la deuxième face du panneau d'atténuation acoustique ainsi que plusieurs éléments conducteurs électriques intégrés dans la structure acoustiquement résistive et configurés pour générer un échauffement grâce à un phénomène d'induction.

Selon l'invention, le système de traitement du givre comporte au moins un deuxième système de traitement du givre de type mécanique configuré pour générer des vibrations mécaniques, les éléments conducteurs électriques du premier système de traitement du givre par induction étant en forme de bandes en matériau conducteur électrique espacées entre elles, le deuxième système de traitement du givre de type mécanique comprenant au moins une source de vibration intercalée entre deux bandes en matériau conducteur électrique du premier système de traitement du givre par induction.

Cette solution permet d'obtenir un traitement du givre efficace pour un panneau d'atténuation acoustique quel que soit le matériau (métal ou matériau composite) des différentes parties du panneau d'atténuation acoustique. De plus, cette solution permet d'espacer les bandes en matériau conducteur électrique et de réduire la consommation électrique du système de traitement du givre, le premier système de traitement du givre par induction étant plus énergivore que le deuxième système de traitement du givre de type mécanique.

Selon une autre caractéristique, le système de traitement du givre comprend plusieurs générateurs de champs électromagnétiques répartis sur la deuxième face du panneau d'atténuation acoustique.

Selon une autre caractéristique, chaque générateur de champs électromagnétiques est fixé contre la couche réflectrice.

Selon une autre caractéristique, chaque générateur de champs électromagnétiques est une bobine électrique.

Selon une autre caractéristique, les bandes en matériau conducteur électrique sont orientées selon deux directions sécantes.

L'invention a également pour objet un aéronef et une entrée d'air d'une nacelle d'aéronef comprenant au moins un panneau d'atténuation acoustique selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une vue en perspective d'un ensemble de propulsion d'un aéronef,
- La figure 3 est une coupe longitudinale d'une partie d'un ensemble de propulsion d'un aéronef,
- La figure 4 est une coupe longitudinale d'une partie d'un panneau d'atténuation acoustique illustrant un mode de réalisation,
- La figure 5 est une vue de face d'une couche de protection contre la foudre d'un panneau d'atténuation acoustique,
- La figure 6 est une coupe longitudinale d'une partie d'un panneau d'atténuation acoustique illustrant un autre mode de réalisation,
- La figure 7 est une vue de face d'une structure acoustiquement résistive d'un panneau d'atténuation acoustique,
- La figure 8 est une vue de dessus schématique d'un système de traitement du givre d'un panneau d'atténuation acoustique illustrant un mode de réalisation de l'invention, et
- La figure 9 est une vue de dessus schématique d'un système de traitement du givre d'un panneau d'atténuation acoustique illustrant un autre mode de réalisation de l'invention.

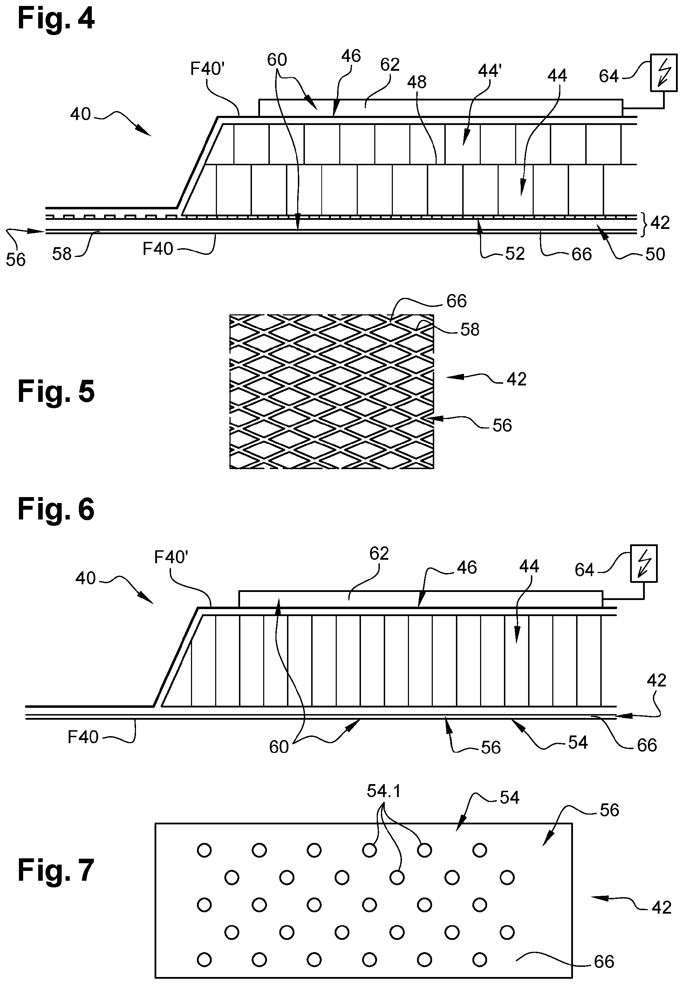

Selon les modes de réalisation visibles sur les figures 4 et 6, un panneau d'atténuation acoustique 40 présente une première face F40 en contact avec un flux d'air dans lequel se propage au moins une onde acoustique ainsi qu'une deuxième face F40' opposée à la première face F40.

Selon une application, une entrée d'air d'une nacelle d'aéronef comprend au moins un panneau d'atténuation acoustique 40 positionné au niveau de la lèvre et/ou du conduit intérieur de l'entrée d'air.

Bien entendu, l'invention n'est pas limitée à cette application. Ainsi, le panneau d'atténuation acoustique 40 pourrait être situé dans d'autres zones d'un aéronef.

Selon les modes de réalisation visibles sur les figures 4 et 6, le panneau d'atténuation acoustique comprend, de la première face F40 vers la deuxième face F40', une structure acoustiquement résistive 42 dont une surface forme la première face F40, au moins une structure alvéolaire 44 ainsi qu'une couche réflectrice 46 dont une surface forme la deuxième face F40'. La structure acoustiquement résistive 42 est perméable à au moins certaines ondes sonores à atténuer.

La couche réflectrice 46 comprend au moins une plaque fine, métallique ou en matériau composite, imperméable aux ondes sonores.

Selon un mode de réalisation visible sur la figure 4, le panneau d'atténuation acoustique 40 comprend deux structures alvéolaires 44, 44' superposées et séparées par une couche acoustiquement résistive 48 perméable aux ondes sonores.

Selon un autre mode de réalisation visible sur la figure 6, le panneau d'atténuation acoustique 40 comprend une unique structure alvéolaire 44.

Selon un mode de réalisation, chaque structure alvéolaire est en matériau composite.

Le nombre de structures alvéolaires 44, 44' et leurs caractéristiques sont déterminés en fonction des caractéristiques acoustiques recherchées pour le panneau d'atténuation acoustique 40.

Selon un mode de réalisation visible sur la figure 4, la structure acoustiquement résistive 42 comprend au moins une couche poreuse 50 en matériau composite traversée par des orifices. Le nombre d'orifices, leur section et leur agencement sont déterminés en fonction des caractéristiques acoustiques recherchées pour le panneau d'atténuation acoustique 40. En complément, la structure acoustiquement résistive 42 peut comprendre au moins un enroulement 52 en matériau composite. Selon un agencement, cet enroulement 52 est positionné entre la structure alvéolaire 44 et la couche poreuse 50.

Selon un autre mode de réalisation visible sur les figures 6 et 7, la structure acoustiquement résistive 42 comprend au moins une couche métallique 54 traversée par des orifices 54.1. Le nombre d'orifices, leur section et leur agencement sont déterminés en fonction des caractéristiques acoustiques recherchées pour le panneau d'atténuation acoustique 40.

Selon une configuration, la structure acoustiquement résistive 42 comprend un système de protection contre la foudre 56 réalisé en un matériau conducteur électrique recouvrant au moins partiellement la première face F40. Selon un agencement, le système de protection contre la foudre 56 recouvre toute la première face F40.

Ce système de protection contre la foudre 56 comprend au moins une couche métallique 54, 58 positionnée au niveau de la structure acoustiquement résistive 42.

Selon un mode de réalisation visible sur la figure 6, lorsque la structure acoustiquement résistive 42 comprend une couche métallique 54 pour la fonction acoustique, cette dernière peut assurer la fonction de protection contre la foudre. Selon ce mode de réalisation, la structure acoustiquement résistive 42 ne comprend pas de couche métallique exclusivement dédiée au système de protection contre la foudre 56 mais une couche métallique 54 assurant les fonctions acoustique et de protection contre la foudre.

Selon un mode de réalisation visible sur la figure 4, la structure acoustique résistive 42 ne comprend que des couches en matériau composite pour la fonction acoustique. En complément, cette structure acoustique résistive 42 comprend une couche métallique 58 dédiée à la fonction de protection contre la foudre. Cette couche métallique 58 du système de protection contre la foudre 56 est positionnée au niveau de la première face F40. Selon une configuration, cette couche métallique 58 se présente sous la forme d'un treillis ou d'un grillage métallique, comme en alliage de cuivre par exemple.

Dans les deux cas, les couches métalliques 54, 58 sont réalisées en un matériau conducteur électrique.

Selon une particularité de l'invention, le panneau d'atténuation acoustique 40 comprend au moins un système de traitement du givre 60 configuré pour générer un échauffement au niveau de la première face F40. Par traitement du givre, on entend un traitement d'antigivrage empêchant la formation de glace ou de givre sur la première face F40 ou un traitement de dégivrage visant à retirer au moins partiellement le givre ou la glace formé(e) sur la première face F40.

Ce système de traitement du givre 60 comprend au moins un générateur de champs électromagnétiques 62, positionné au niveau de la deuxième face F40' et alimenté par au moins une alimentation électrique 64, ainsi qu'au moins un élément conducteur électrique 66 situé au niveau de la première face F40 du panneau d'atténuation acoustique 40, positionné dans le champ électromagnétique produit par le générateur de champs électromagnétiques 62 et configuré pour générer un échauffement grâce à un phénomène d'induction. Chaque élément conducteur électrique 66 est configuré pour limiter son impact sur le traitement acoustique. Cette solution permet d'obtenir un traitement du givre efficace pour un panneau d'atténuation acoustique 40 essentiellement en matériau composite (à l'exception du (ou des) élément(s) conducteur(s) électrique(s) du système de traitement du givre 60).

Selon un premier agencement, le générateur de champs électromagnétiques 62 est intégré au panneau d'atténuation acoustique 40 en étant fixé contre la couche réflectrice 46. Selon un deuxième agencement, le générateur de champs électromagnétiques 62 est un élément disjoint de la couche réflectrice 46, positionné à proximité de cette dernière.

Selon un mode de réalisation, le générateur de champs électromagnétiques 62 est configuré pour occuper un état activé dans lequel il génère un champ électromagnétique provoquant, grâce à un phénomène d'induction, un échauffement de chaque élément conducteur électrique 66 positionné dans le champ électromagnétique produit par le générateur de champs électromagnétiques 62 et un état désactivé dans lequel il ne génère aucun champ électromagnétique et ne provoque pas un échauffement des éléments conducteurs électriques 66. En complément, le système de traitement du givre 60 comprend au moins une commande pour contrôler l'état activé ou désactivé du générateur de champs électromagnétiques 62.

Selon une configuration, le système de traitement du givre 60 comprend plusieurs générateurs de champs électromagnétiques 62 répartis sur toute la deuxième face F40' du panneau d'atténuation acoustique 40. Chaque générateur de champs électromagnétiques 62 peut interagir avec un élément conducteur électrique 66 ou plusieurs éléments conducteurs électriques 66.

Selon un mode de réalisation, chaque générateur de champs électromagnétiques 62 est une bobine électrique.

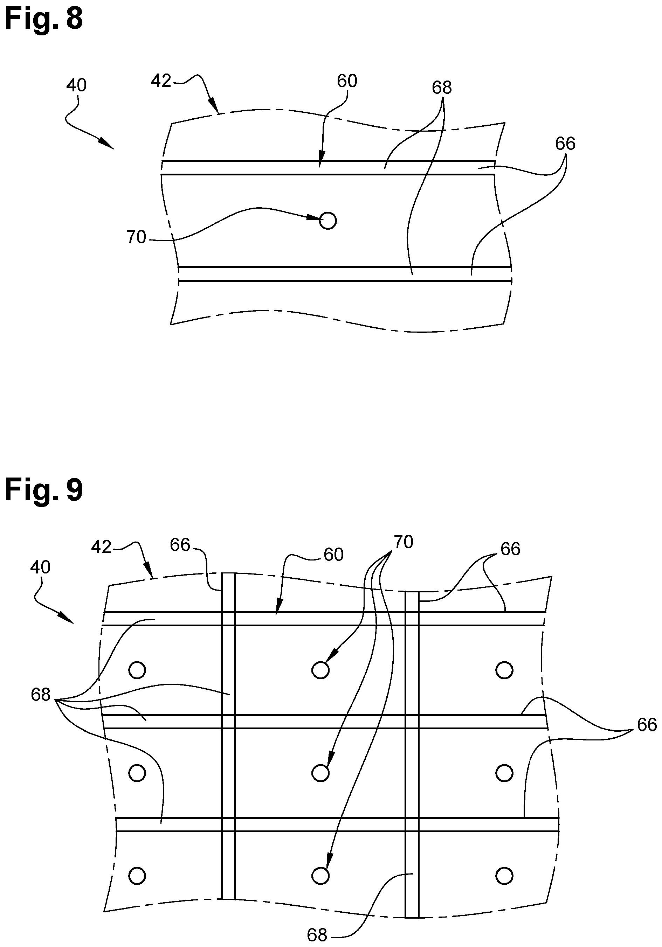

Selon une caractéristique de l'invention visible sur les figures 7 et 8, le système de traitement du givre 60 comprend plusieurs éléments conducteurs électriques 66, intégrés dans la structure acoustiquement résistive 42, en forme de bandes en matériau conducteur électrique 68. Selon cette configuration, les éléments conducteurs électriques peuvent n'avoir qu'une seule fonction de traitement du givre.

Selon un premier agencement visible sur la figure 8, les bandes en matériau conducteur électrique 68 sont parallèles entre elles et orientées selon une seule direction.

Selon un autre agencement visible sur la figure 9, les bandes en matériau conducteur électrique 68 sont orientées selon deux directions sécantes, notamment perpendiculaires.

Selon un mode de réalisation visible sur la figure 9, le panneau d'atténuation acoustique 40 comprend au moins un premier système de traitement du givre 60 par induction, comme précédemment décrit, ainsi qu'au moins un deuxième système de traitement du givre de type mécanique 70 configuré pour générer des vibrations mécaniques comme des éléments piézoélectriques par exemple. Selon une configuration, le deuxième système de traitement du givre de type mécanique 70 comprend au moins une source de vibration intercalée entre deux bandes en matériau conducteur électrique 68 du premier système de traitement du givre 60 par induction. Cette solution permet d'espacer les bandes en matériau conducteur électrique 68 et de réduire la consommation électrique du système de traitement du givre 60, le premier système de traitement du givre par induction étant plus énergivore que le deuxième système de traitement du givre de type mécanique 70.

## Revendications

1. Panneau d'atténuation acoustique présentant une première face (F40), configurée pour être en contact avec un flux d'air dans lequel se propage au moins une onde acoustique en fonctionnement, ainsi qu'une deuxième face (F40') opposée à la première face (F40), ledit panneau d'atténuation acoustique comprenant au moins un système de traitement du givre (60) et, de la première face (F40) vers la deuxième face (F40'), une structure acoustiquement résistive (42) dont une surface forme la première face (F40), au moins une structure alvéolaire (44) ainsi qu'une couche réflectrice (46) dont une surface forme la deuxième face (F40') ; le système de traitement du givre (60) comportant au moins un premier système de traitement du givre (60) par induction qui comprend au moins un générateur de champs électromagnétiques (62) positionné au niveau de la deuxième face (F40') du panneau d'atténuation acoustique (40) ainsi que plusieurs éléments conducteurs électriques (66) intégrés dans la structure acoustiquement résistive (42) et configurés pour générer un échauffement grâce à un phénomène d'induction ; **caractérisé en ce que** le système de traitement du givre (60) comporte au moins un deuxième système de traitement du givre de type mécanique (70) configuré pour générer des vibrations mécaniques, les éléments conducteurs électriques (66) du premier système de traitement du givre (60) par induction étant en forme de bandes en matériau conducteur électrique (68) espacées entre elles, le deuxième système de traitement du givre de type mécanique (70) comprenant au moins une source de vibration intercalée entre deux bandes en matériau conducteur électrique (68) du premier système de traitement du givre (60) par induction.

2. Panneau d'atténuation acoustique selon la revendication précédente, **caractérisé en ce que** le système de traitement du givre (60) comprend plusieurs générateurs de champs électromagnétiques (62) répartis sur la deuxième face (F40') du panneau d'atténuation acoustique (40).

3. Panneau d'atténuation acoustique selon l'une des revendications précédentes, **caractérisé en ce que** chaque générateur de champs électromagnétiques (62) est fixé contre la couche réflectrice (46).

4. Panneau d'atténuation acoustique selon l'une des revendications précédentes, **caractérisé en ce que** chaque générateur de champs électromagnétiques (62) est une bobine électrique.

5. Panneau d'atténuation acoustique selon l'une des revendications précédentes, **caractérisé en ce que** les bandes en matériau conducteur électrique (68) sont orientées selon deux directions sécantes.

6. Entrée d'air d'une nacelle d'aéronef comprenant au moins un panneau d'atténuation acoustique selon l'une des revendications précédentes.

7. Aéronef comprenant au moins un panneau d'atténuation acoustique selon l'une des revendications 1 à 5.

## Patentansprüche

1. Schalldämmende Platte mit einer ersten Seite (F40), die dazu eingerichtet ist, mit einem Luftstrom in Kontakt zu stehen, in dem sich im Betrieb wenigstens eine Schallwelle ausbreitet, sowie mit einer zweiten Seite (F40'), die der ersten Seite (F40) gegenüberliegt, wobei die schalldämmende Platte wenigstens ein Enteisungssystem (60) aufweist und, von der ersten Seite (F40) zur zweiten Seite (F40') hin, eine schalldämmpfende Struktur (42), deren eine Oberfläche die erste Seite (F40) bildet, wenigstens eine Wabenstruktur (44) sowie eine reflektierenden Schicht (46), deren eine Oberfläche die zweite Seite (F40') bildet, wobei das Enteisungssystem (60) wenigstens ein erstes induktives Enteisungssystem (60) umfasst, das wenigstens einen Generator für elektromagnetische Felder (62) aufweist, der im Bereich der zweiten Seite (F40') der schalldämmenden Platte (40) angeordnet ist, sowie mehrere elektrisch leitende Elemente (66), die in die schalldämmpfende Struktur (42) integriert und so eingerichtet sind, dass sie durch ein Induktionsphänomen eine Erwärmung erzeugen, **dadurch gekennzeichnet, dass** das Enteisungssystem (60) wenigstens ein zweites mechanisches Enteisungssystem (70) aufweist, das so eingerichtet ist, dass es mechanische Schwingungen erzeugt, wobei die elektrisch leitenden Elemente (66) des ersten induktiven Enteisungssystems (60) die Form von voneinander beabstandeten Streifen aus elektrisch leitendem Material (68) haben, wobei das zweite mechanische Enteisungssystem (70) wenigstens eine Schwingungsquelle aufweist, die zwischen zwei Streifen aus elektrisch leitendem Material (68) des ersten induktiven Enteisungssystems (60) angeordnet ist.

2. Schalldämmende Platte gemäß dem vorstehenden Anspruch, **dadurch gekennzeichnet, dass** das Enteisungssystem (60) mehrere Generatoren für elektromagnetische Felder (62) aufweist, die auf der zweiten Seite (F40') der schalldämmenden Platte (40) verteilt sind.

3. Schalldämmende Platte nach einem der vorstehenden Ansprüche, **dadurch gekennzeichnet, dass** jeder Generator für elektromagnetische Felder (62) an der reflektierenden Schicht (46) befestigt ist.

4. Schalldämmende Platte nach einem der vorstehenden Ansprüche, **dadurch gekennzeichnet, dass** jeder Generator für elektromagnetische Felder (62) eine elektrische Spule ist.

5. Schalldämmende Platte nach einem der vorstehenden Ansprüche, **dadurch gekennzeichnet, dass** die Streifen aus elektrisch leitendem Material (68) in zwei sich schneidenden Richtungen ausgerichtet sind.

6. Lufteinlass eines Luftfahrzeugs, der wenigstens eine schalldämmende Platte gemäß einem der vorstehenden Ansprüche aufweist.

7. Luftfahrzeug, das wenigstens eine schalldämmende Platte gemäß einem der Ansprüche 1 bis 5 aufweist.

## Claims

1. Acoustic attenuation panel having a first face (F40), configured to be in contact with an air stream in which at least one acoustic wave is propagated in operation, and a second face (F40') opposite the first face (F40), said acoustic attenuation panel comprising at least one frost treatment system (60) and, from the first face (F40) to the second face (F40'), an acoustically resistive structure (42) of which one surface forms the first face (F40), at least one cellular structure (44) and a reflective layer (46) of which one surface forms the second face (F40'); the frost treatment system (60) comprising at least one first, induction-based, frost treatment system (60) which comprises at least one electromagnetic field generator (62) positioned at the second face (F40') of the acoustic attenuation panel (40) and several electrically conductive elements (66) incorporated in the acoustically resistive structure (42) and configured to generate a heating through an induction phenomenon ; **characterized in that** the frost treatment system (60) comprises at least one second frost treatment system of mechanical type (70) configured to generate mechanical vibrations, the electrically conductive elements (66) of the first, induction-based, frost treatment system (60) being in the form of strips of electrically conductive material (68) spaced apart from one another, the second frost treatment system of mechanical type (70) comprising at least one vibration source inserted between two strips of electrically conductive material (68) of the first, induction-based, frost treatment system (60).

2. Acoustic attenuation panel according to the preceding claim, **characterised in that** the frost treatment system (60) comprises several electromagnetic field generators (62) distributed on the second face (F40') of the acoustic attenuation panel (40).

3. Acoustic attenuation panel according to one of the preceding claims, **characterised in that** each electromagnetic field generator (62) is fixed against the reflective layer (46).

4. Acoustic attenuation panel according to one of the preceding claims, **characterised in that** each electromagnetic field generator (62) is an electric coil.

5. Acoustic attenuation panel according to one of the preceding claims, **characterised in that** the strips of electrically conductive material (68) are oriented in two secant directions.

6. Air intake of an aircraft nacelle comprising at least one acoustic attenuation panel according to one of the preceding claims.

7. Aircraft comprising at least one acoustic attenuation panel according to one of Claims 1 to 5.
